(19) Europäisches Patentamt / European Patent Office / Office européen des brevets

(11) **EP 4 174 524 A1**

(12) **DEMANDE DE BREVET EUROPEEN**

(43) Date de publication:
**03.05.2023 Bulletin 2023/18**

(21) Numéro de dépôt: **22204332.5**

(22) Date de dépôt: **28.10.2022**

(51) Classification Internationale des Brevets (IPC):
**G01S 13/95** (2006.01)   **G01S 7/02** (2006.01)
**G01S 13/58** (2006.01)

(52) Classification Coopérative des Brevets (CPC):
**G01S 13/951; G01S 7/024; G01S 13/581; G01S 13/958**

(84) Etats contractants désignés:
**AL AT BE BG CH CY CZ DE DK EE ES FI FR GB GR HR HU IE IS IT LI LT LU LV MC ME MK MT NL NO PL PT RO RS SE SI SK SM TR**
Etats d'extension désignés:
**BA**
Etats de validation désignés:
**KH MA MD TN**

(30) Priorité: **28.10.2021 FR 2111477**

(71) Demandeur: **NOVIMET**
**78180 Montigny-le-Bretonneux (FR)**

(72) Inventeurs:
• **TESTUD, Jacques**
**75017 PARIS (FR)**
• **LE BOUAR, Erwan**
**93100 MONTREUIL (FR)**

(74) Mandataire: **Regimbeau**
**20, rue de Chazelles**
**75847 Paris Cedex 17 (FR)**

(54) **TRAITEMENT DE DONNÉES D'UN RADAR BIPOLAIRE PAR ANALYSE SPECTRALE CROISÉE**

(57) L'invention concerne un traitement qui met en œuvre les étapes suivantes d'estimation de paramètres polarimétriques
• Identification dans le spectre de puissance croisée des raies qui contiennent du signal et de celles qui ne contiennent que du bruit ;
• Suppression des spectres de puissances de chaque voie et du spectre de puissance croisée les raies aux fréquences identifiées comme ne contenant que du bruit dans le spectre de puissance croisée ;
• Calcul des paramètres polarimétriques en fonction des spectres de puissances ainsi corrigés.

Application aux radars météorologiques et à d'autres types de radars bipolaires à réception cohérente.

[Fig. 1]

EP 4 174 524 A1

**EP 4 174 524 A1**

## Description

### Domaine technique général et art antérieur

La présente invention concerne les radars bipolaires.

Elle trouve avantageusement application pour les radars météorologiques, mais également pour la détection de cibles ponctuelles (drone, avion, missile), ou la télédétection de la surface terrestre.

Le radar météorologique à diversité de polarisation (ou dual pol) s'est imposé dans tous les réseaux de radars en bande C (5,35 GHz) et S (3 GHz) des offices météorologiques nationaux. La multiplicité des paramètres auxquels il donne accès permet de mieux décrire les systèmes pluvieux (distinction des types d'hydrométéores), et d'estimer quantitativement la précipitation avec une précision accrue.

La diversité de polarisation a également permis la réémergence des radars météo en bande X (9,3 GHz), qui avaient été auparavant écartés de l'application opérationnelle, en raison de l'atténuation de l'onde radar à la traversée de pluies intenses. Un paramètre de base mesuré par le radar météo est en effet le facteur de réflectivité Z, qui s'exprime en mm6/m3 (somme des sections efficaces des gouttes de pluie dans le volume diffusant), ou en dBZ (Z_dBZ = 10 log10(Z)). Z se trouve fortement biaisé négativement, en bande X, sur les trajets où de fortes pluies sont rencontrées, perdant ainsi toute signification.

La diversité de polarisation permet de surmonter ce handicap grâce à la mesure d'un paramètre clé : la phase différentielle ΦDP qui se construit le long du trajet entre l'onde de polarisation H et l'onde de polarisation V à la traversée des pluies intenses. L'atténuation aller-retour de l'onde radar le long du trajet (en dB) est en effet tout simplement le tiers de la phase différentielle en degrés. En bande X, la réflectivité corrigée, en dBZ (directement interprétable physiquement) peut être mesurée comme la réflectivité apparente, en dBZ (mesurée par le radar) augmentée de ΦDP /3. C'est dire l'importance de ce paramètre ΦDP.

Dans le contexte du changement climatique, associé à une augmentation de fréquence des évènements pluvieux extrêmes, source de catastrophes (crues-éclairs extrêmes, ruissèlements urbains, glissements de terrain), la vogue actuelle du radar météo bande X tient à plusieurs faits.

Pour des performances similaires au radar bande C ou S, le radar est de dimensions réduites, donc installable au cœur des villes ou des bassins versants à surveiller.

Le bilan de puissance est nettement plus favorable qu'en bande C ou S car la section efficace de diffusion des gouttes de pluies est proportionnelle à D6/λ4 (D : diamètre de la goutte, λ : longueur d'onde du radar).

L'émergence sur le marché de l'émetteur à état solide en bande X, qui a l'avantage par rapport au traditionnel émetteur à magnétron d'être cohérent et extrêmement endurant.

Un but général de l'invention est la recherche de l'amélioration du rapport signal sur bruit.

La puissance crête de l'émetteur état solide est environ cent fois plus faible que celle d'un magnétron. Pour récupérer un rapport signal sur bruit comparable à celui du radar à magnétron tout en maintenant la résolution radiale d'impulsions courtes (telle que 1 microseconde), il est diverses voies dont l'amélioration du traitement du signal. L'analyse de Fourier est une voie possible explorée dans ce brevet. Elle s'applique aussi bien au radar à compression d'impulsion qu'aux autres types de radar cohérent (tous tubes de puissance).

La spécificité du radar météo est de mettre en œuvre la diversité de polarisation - non utilisée dans les radars militaires - et qui permet de faire appel à l'analyse spectrale croisée. Le potentiel d'amélioration du rapport signal sur bruit sur la phase différentielle par utilisation de cette technique est d'environ 6 dB.

Avec un radar météo à diversité de polarisation, le traitement du signal du radar vise à délivrer les paramètres de mesure brutes suivants :

Facteur de réflectivité Z (atténué) en dBZ ;
Facteur de réflectivité différentielle (atténué) ZDR (dB),
Coefficient de corrélation pHV,
Phase différentielle ΦDP,
Vitesse radiale VR,
Variance de la vitesse radiale σV.

Le traitement du signal traditionnellement utilisé en radar météo repose sur le « pulse pair » et la transformée de Fourier (FFT ou DFT).

### Le « pulse pair »

On part du signal analytique, $s_H(i)$ pour la voie H et $s_V(i)$ pour la voie V.

En bande X, une fréquence usuelle de répétition des impulsions (PRF) du radar est 1000 Hz. On traite des

2

séries de M impulsions (par exemple 64) et l'on calcule les coefficients d'auto et d'inter corrélation tels que (où le symbole * désigne le produit analytique) :

$$C_H = \frac{1}{M} \sum_{i=1}^{M} s_H(i) * s_H(i)$$

$$C_{H+1} = \frac{1}{M-1} \sum_{i=1}^{M-1} s_H(i) * s_H(i+1)$$

$$C_V = \frac{1}{M} \sum_{i=1}^{M} s_V(i) * s_V(i)$$

$$C_{HV} = \frac{1}{M} \sum_{i=1}^{M} s_H(i) * s_V(i)$$

On calcule ensuite les paramètres bruts du radar de la façon suivante :

Réflectivité Z :

$$Z = K.C_H.r^2$$

Où K est la « constante radar » dépendant des caractéristiques du radar et r la distance radar-cible.

Réflectivité différentielle ZDR

$$Z_{DR} = C_H / C_V$$

Coefficient de corrélation pHV

$$\rho_{HV} = \frac{|C_{HV}|}{\sqrt{|C_H||C_V|}}$$

Phase différentielle

$$\Phi_{DP} = \frac{180}{\pi} arg(C_{HV})$$

Vitesse radiale

$$V_R = \frac{\lambda \, PRF}{4\pi} arg(C_{H+1})$$

*La transformée de Fourier*

L'autre approche couramment utilisée est la transformée du Fourier des séries $s_H(i)$ et $s_V(i)$. L'analyse du spectre de puissance (calcul des moments) permet de dériver la puissance du signal météo (d'où la réflectivité) son décalage Doppler (d'où la vitesse radiale) sa variance (d'où la variance des vitesses dans le volume diffusant.

Toutefois la transformée de Fourier n'est pas utilisée pour estimer les paramètres polarimétriques tels que la phase différentielle et le coefficient de corrélation. Elle est plutôt un outil de pré-filtrage des signaux parasites indésirables (particulièrement les échos de sol). On revient ensuite dans le domaine temporel pour estimer les paramètres physiques précités par la technique « pulse pair ».

*Les limitations du traitement par « pulse pair ».*

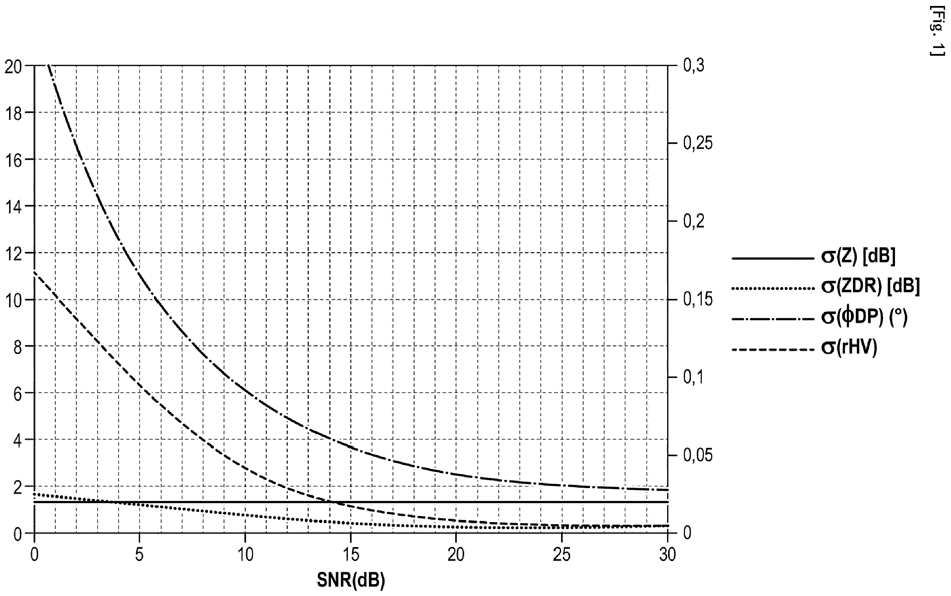

Le pulse pair est un traitement très simple et très efficace. Il produit des estimateurs précis et non biaisés aussi longtemps que le rapport signal sur bruit (SNR en anglais) est suffisamment élevé (> 15 dB pour un traitement à 64 impulsions). Dès que SNR descend en dessous de 15 dB, les estimateurs de $\Phi$DP et pHV se dégradent et deviennent rapidement inexploitables, comme le montre la Figure 1 qui illustre la précision de l'estimateur « pulse pair » à 64 impulsions, en fonction du rapport signal à bruit SNR. La simulation est réalisée pour de la pluie où le coefficient de corrélation physique est de 0.99 en toutes circonstances. Le traitement considère 64 impulsions. On voit que l'incertitude de l'estimateur du coefficient de corrélation pHV (courbe rouge) se dégrade rapidement pour atteindre $\pm 0{,}05$ à 9dB de SNR. Sachant que le coefficient de corrélation dans la neige fondante est de 0.95, cela signifie que pour des SNR inférieurs à 9dB, on ne sait plus distinguer la « bande brillante », signature de la couche de fusion qui permet de distinguer la neige de la pluie. De même pour l'estimateur de $\Phi$DP (triangles noirs) dont l'incertitude dépasse $\pm$ 6° pour SNR < 10 dB.

Le paramètre $\Phi$DP étant essentiel pour corriger la réflectivité Z de l'atténuation, c'est sa détection qui dimensionne le rapport signal sur bruit (SNR) requis pour obtenir des données exploitables, et donc finalement pour estimer la portée du radar. Les données du radar ne pourront être exploitées pour des mesures quantitatives du taux de pluie qu'aussi longtemps que SNR > 10 dB.

## Présentation générale de l'invention

Un but de l'invention est de proposer une solution qui permet de pallier tout ou partie des problématiques de l'art antérieur.

Elle propose à cet effet un procédé de détermination d'informations sur des paramètres physiques observables par un radar bipolaire à réception cohérente, apte à émettre des séries d'impulsions et recevoir et échantillonner un signal en retour,

dans lequel au moins une unité de traitement met en œuvre les étapes suivantes d'estimation de paramètres polarimétriques

- Détermination des séries temporelles du signal analytique pour ses deux voies d'émission H et V ;
- Calcul, à partir de ces séries temporelles, des transformées de Fourier du signal analytique de ces deux voies H et V ;
- Calcul, à partir de ces transformées de Fourier des spectres, de puissance de chaque voie HH, VV, et du spectre de puissance croisé HV ;
- Identification dans le spectre de puissance croisée des raies qui contiennent du signal et de celles qui ne contiennent que du bruit ;
- Suppression des spectres de puissances de chaque voie et du spectre de puissance croisée les raies aux fréquences identifiées comme ne contenant que du bruit dans le spectre de puissance croisée ;
- Calcul des paramètres polarimétriques en fonction des spectres de puissances ainsi corrigés, et dans lequel une détermination d'informations sur des paramètres physiques observables est également mise en œuvre par traitement de ces paramètres polarimétriques.

Ce procédé est avantageusement complété par les différentes caractéristiques suivantes, prises seules ou en combinaison :

- on détermine les moments du spectre croisé et on traite les moments ainsi pour identifier des raies qui contiennent du signal ;
- les moments des voies HH et VV et ceux du spectre de puissance croisé HV sont calculés après suppression des raies ne contenant que du bruit et dans lequel les paramètres polarimétriques sont calculés en fonction des spectres de puissances ainsi corrigés ;
- pour une fréquence de répétition des impulsions du radar PRF, la détermination est mise en œuvre dans deux configurations :

- • la bande d'analyse de Fourier [-PRF/4, PRF/4] est centrée sur zéro
- • le spectre Doppler est représenté sur l'intervalle [0, PRF/2] et on sélectionne la configuration qui conduit à la variance la plus faible ;

- les spectres de puissance sont traités pour distinguer l'écho « normal » de première trace à phase différentielle plus faible, et l'écho de seconde trace à phase différentielle nécessairement plus importante ;

L'invention concerne en outre un produit programme d'ordinateur comprenant des instructions adaptées à la mise en œuvre des étapes du procédé précité par au moins un calculateur.

**Brève description des dessins**

D'autres caractéristiques et avantages de l'invention ressortiront encore de la description qui suit, laquelle est purement illustrative et non limitative, et doit être lue en regard des figures annexées sur lesquelles :

- la figure 1 est l'écart type de l'erreur sur les différentes observables radar

    - réflectivité Z, réflectivité différentielle ZDR, phase différentielle $\Phi$DP et coefficient de corrélation pHV- en fonction du rapport signal sur bruit SNR.

- la figure 2 illustre le schéma fonctionnel du radar bipolaire 9.
- la figure 3 représente schématiquement un spectre de puissance associé à la transformée de Fourier du signal H (ou V). La bande d'analyse du signal est l'intervalle [-PRF/4 ; +PRF/4] dans l'espace des fréquences ou [-$V_a$; +$V_a$] dans l'espace des vitesses radiales ($V_a$= $\lambda$.PRF/4 avec $\lambda$ longueur d'onde du radar).
- la figure 4 est la représentation dans le plan analytique du signal s auquel s'ajoute le bruit b. On voit que lorsque $|s|/|b|$ = 10, l'erreur de phase est de 6°. En termes de rapport signal sur bruit où l'on raisonne en puissance, ceci correspond à S/B = 20 dB.

**Description d'un ou plusieurs modes de mise en œuvre et de réalisation**

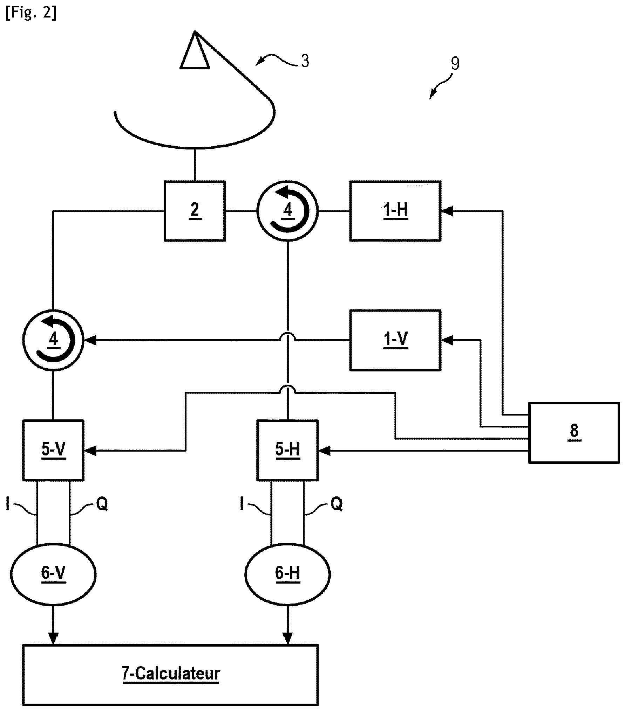

La figure 2 illustre un radar bipolaire 9. Le radar bipolaire 9 peut comprendre :

- deux émetteurs à état solide 1-H et 1-V alimentant respectivement les polarisations horizontale (H) et verticale (V) de l'antenne d'émission;
- un extracteur de mode (ou orthomode) relié par deux voies aux émetteurs 1-H et 1-V ;
- une antenne 3 à cornet transmettant ou recevant les deux polarisations ;
- des circulateurs 4 (tés de filtrage) interposés sur les voies H et V, entre l'extracteur de mode 2 et les émetteurs à état solide 1 ;
- des moyens de réception analogiques 5-H et 5-V reliés, pour les voies H et V aux circulateurs 4 ;
- un oscillateur qui synchronise les émetteurs 1-H et1-V et les moyens de réception 5-H et 5-V
- des moyens 6-H et 6-V d'échantillonnage, puis de traitement des sorties I et Q de ces moyens de réception 5, les moyens de traitement 6 permettant le calcul des transformées de Fourier des séries échantillonnées de I et Q (par FFT ou DFT).

On peut noter ici que de façon plus générale, le traitement qui est proposé ci-dessous s'applique à tout autre technologie de radar météo bipolaire à réception cohérente (et en particulier aux radars à magnétron, klystron ou tube à onde progressive, et au radar FMCW bipolaire]).

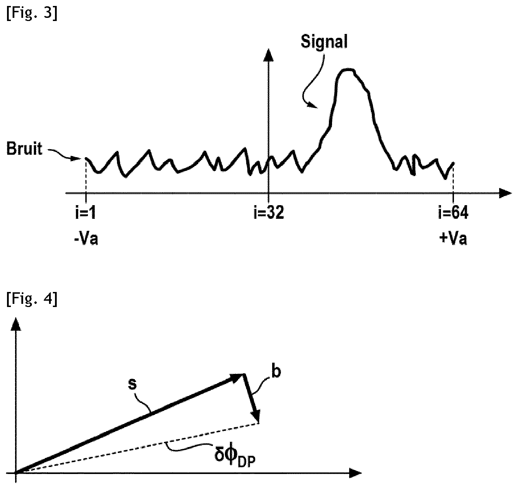

Un ordinateur de traitement 7 permettant de calculer, à partir des transformées de Fourier H et V, les spectres de puissances PHH, PVV [illustrés dans la figure 3], et PHV, puis à partir de ces spectres de puissance, les observables ZH, ZDR, pHV, $\Phi$DP, VR, $\sigma$V.

Spectre de puissance croisé

On repart des séries temporelles du signal analytique comme dans le traitement par « pulse pair » :

$$\{s_H(i)\}, i = 1..M \qquad (1)$$

et

$$\{s_V(i)\}, i = 1..M \qquad (2)$$

On calcule les transformées de Fourier des séries (1) et (2) (par exemple par FFT ou DFT) en ayant pris soin d'appliquer un fenêtrage préalable tel que Hamming ou tout autre, pratique courante de la plupart des fabricants de radars météo. Par exemple, par rapport à la fenêtre rectangulaire, la fenêtre de Hamming abaisse les lobes secondaires du filtre équivalent à -43 dB (contre -13dB avec la fenêtre rectangulaire) au prix d'une détérioration de la résolution spectrale d'un facteur 2.

Le traitement proposé exploite des spectres de Fourier. Si l'on appelle FH(i) et FV(i) les transformées de Fourier de (1) et (2), l'exploitation courante qui en est faite est de calculer les spectres de puissance correspondants.

$$\{P_H(i) = F_H(i) * F_H(i)\}, i = 1..M \qquad (3)$$

et

$$\{P_V(i) = F_V(i) * F_V(i)\}, i = 1..M \qquad (4)$$

Comme précédemment, dans (3) et (4) le produit * désigne le produit analytique, et les spectres de puissance PH(i) et PV(i) sont réels et positifs. Ces spectres de puissance peuvent être exploités pour estimer la puissance du signal météo (d'où la réflectivité Z), son décalage Doppler (d'où la vitesse Doppler vR des cibles météo), sa variance (d'où la variance σV des vitesses Doppler).

Cependant, dans PH(i) et PV(i) toute information de phase différentielle ΦDP et de coefficient de corrélation pHV a disparu.

Le traitement prend en compte le spectre croisé PHV(i) de la façon suivante :

$$\{P_{HV}(i) = F_H(i) * F_V(i)\}, i = 1..M \qquad (5)$$

Dans chaque raie spectrale on peut écrire :

$$P_{HV}(i) = S_{HV}(i) + B_{HV}(i) \qquad (6)$$

Où SHV(i) est le spectre de puissance croisée du signal météo et BHV(i) est celui du bruit.

Spécificités du spectre de puissance croisée :

Le bruit dans la voie H étant incohérent par rapport au bruit dans la voie V, dans chaque raie spectrale BHV(i) est en moyenne nul, tandis que son écart type est la racine carrée du produit des écarts types de BH(i) [bruit dans la voie H] et Bv(i) [bruit dans la voie V].

Les informations de ΦDP et pHV sont maintenant dans SHV(i) car :

$$\Phi_{DP} = arg\left(\sum_{i=1}^{M} S_{HV}(i)\right) \qquad (7)$$

$$\rho_{HV} = \frac{\left|\sum_{i=1}^{M} S_{HV}(i)\right|}{\left|\sum_{i=1}^{M} S_H(i)\right|^{1/2} \left|\sum_{i=1}^{M} S_V(i)\right|^{1/2}} \qquad (8)$$

La méthode de détermination des variables polarimétriques

L'objet de l'analyse de Fourier est d'isoler le signal radar (supposé une fonction aléatoire gaussienne stationnaire) de largeur typique $\pm 1$ m/s dans l'espace des vitesses Doppler, dans une bande d'analyse spectrale $\pm Va$ [Va ou « vitesse ambiguë » vaut typiquement 8m/s ou 16m/s, selon la fréquence de répétitions des impulsions du radar]. Puis d'en déterminer les caractéristiques.

La figure 3 représente schématiquement un spectre de puissance Doppler obtenu à partir d'une série [I,Q] de 64 tirs. Une technique classique d'estimation de Z, VR et σV est la méthode des moments. Par exemple pour la voie H, en calculant les trois premiers du spectre :

$$M_0 = \sum_1^M P_H(i) \quad (9)$$

$$M_1 = \sum_1^M i.P_H(i) \quad (10)$$

$$M_2 = \sum_1^M i^2.P_H(i) \quad (11)$$

On a accès aux estimateurs suivants :

$$\widehat{Z_H} \propto M_0 \quad (12)$$

$$\widehat{V_R} \propto M_1/M_0 \quad (13)$$

$$\widehat{\sigma_V} \propto \frac{M_2}{M_0} - \left(\frac{M_1}{M_0}\right)^2 \quad (14)$$

Cependant ces estimateurs sont biaisés par le talon de bruit. Le problème devant lequel on a buté jusqu'à présent était l'ébasage du spectre afin d'éliminer le biais des estimateurs. On peut bien sûr estimer le bruit dans les raies spectrales où l'on est certain qu'il n'y a que du bruit, puis ébaser le spectre pour éliminer le bruit. Cependant, pour éliminer les pics de bruit (à deux ou trois fois au-dessus de la moyenne), on est contraint d'ébaser à un niveau tel que le gain de l'analyse de Fourier devient faible par rapport à la technique traditionnelle du pulse pair. C'est ce problème de l'ébasage du spectre Doppler qui a fait renoncer jusqu'à présent à l'analyse de Fourier au profit du pulse pair.

L'analyse spectrale croisée permet de surmonter le problème de l'ébasage. Un spectre de puissance croisé ne peut être représenté dans un diagramme tel que celui de la Figure 2 car toutes ses raies spectrales sont à valeurs complexes. On peut néanmoins considérer la méthode des moments pour déterminer les estimateurs suivants :

$$Z_{HV}\widehat{\exp(j}\Phi_{DP}) \propto M_0 \quad (15)$$

$$\widehat{V_R} \propto M_1/M_0 \quad (16)$$

$$\widehat{\sigma_V} \propto \frac{M_2}{M_0} - \left(\frac{M_1}{M_0}\right)^2 \quad (17)$$

Où j2=-1

Le grand intérêt de considérer le spectre croisé est qu'il permet d'accéder à des estimateurs non biaisés, car comme souligné précédemment,$\langle B_{HV}(i)\rangle = 0$ [pour i =1.. M].

Bien entendu cela ne signifie pas que le bruit soit absent du spectre croisé. Sa variance dans chaque raie spectrale est donnée par :

$$\langle (B_{HV}(i))^2 \rangle = \langle B_H(i)^2 \rangle - \langle B_H(i) \rangle^2 = \langle B_V(i)^2 \rangle - \langle B_V(i) \rangle^2 \qquad (18)$$

Autrement dit, la variance du bruit dans la voie HV est la même que celle dans la voie H ou dans la voie V, mais sa valeur moyenne est nulle.

L'application des formules (15), (16) et (17) permettant une estimation non biaisée de $Z_{HV}\exp(i\Phi_{Dp})$, $V_R$ et $\sigma_V$, on peut identifier dans le spectre les raies qui contiennent le signal, puis alors écarter toutes les raies spectrales contenant du bruit seul pour effectuer un nouveau calcul des moments plus précis.

Sur le spectre croisé, l'identification du signal au sein du spectre complexe peut être réalisée dès que le rapport « puissance du signal » sur « variance du bruit » excède 0 dB dans la raie spectrale concernée.

S'agissant de la mesure de $\Phi DP$, une simple considération géométrique, illustrée par la Figure 4 indique le rapport signal sur bruit requis pour une erreur de phase donnée.

Dans le Figure 3 on représente dans le plan analytique le signal s auquel s'ajoute le bruit b. On voit que lorsque $|s|/|b|$ = 10, l'erreur de phase est de 6°. En termes de rapport signal sur bruit où l'on raisonne en puissance, ceci correspond à S/B = 20 dB.

Dans le cas de l'analyse spectrale, ce rapport S/B doit être obtenu dans la raie spectrale qui contient le signal. Le rapport entre la largeur de la bande de base d'analyse du signal et la largeur de la raie spectrale qui contient le signal étant M/2 (toujours dans le cas d'une fenêtre de Hamming), ceci correspond à un rapport S/B dans la bande d'analyse du signal de 20 - 10. $log_{10}(M/2)$(dB).

Avec le « puise pair », c'est le rapport signal sur bruit après intégration incohérente qu'il faut considérer. Compte tenu du fait qu'après intégration sur M-1 paires, la puissance de bruit est divisée par $\sqrt{M-1}$, pour obtenir après intégration un rapport signal sur bruit de 20 dB, il suffit que le rapport signal sur bruit dans la bande de base excède :

$$20 - 10. log_{10}\sqrt{M-1} \ (\text{dB})$$

On voit donc que l'approche par l'analyse spectrale croisée permet de gagner :

$$10. log_{10}\left[(M/2)/\sqrt{M-1}\right] \qquad (\text{dB})$$

en rapport signal sur bruit.

Soit 4,6 dB pour M=32, 6 dB pour M=64, 7,5 dB pour M=128.

Remarque : La technique de l'analyse spectrale croisée permet d'améliorer également la détection de tout type de cibles ponctuelles ou distribuées telles que drone, oiseaux, échos en air clair, etc...

Problème lié au repliement spectral

Lorsque le spectre du signal s'approche des butées de la bande d'analyse [-PRF/4, PRF/4] (PRF=Pulse Repetition Frequency), l'approche classique du calcul de la vitesse radiale et de la variance par la méthode des moments peut conduire à des biais, voire à des aberrations (problème du repliement spectral du signal à l'intérieur de la bande d'analyse). Un moyen pratique de l'éviter est d'effectuer le calcul dans deux configurations : « naturelle » où la bande d'analyse de Fourier est [-PRF/4, PRF/4] centrée sur zéro (en sortie naturelle de la transformée de Fourier), et « dépliée » où le spectre Doppler est représenté sur l'intervalle [0, PRF/2]. En sélectionnant la configuration qui conduit à la variance la plus faible, on évite le phénomène de biais dû au repliement spectral lorsque la raie du signal s'approche de la borne.

Gain de l'analyse spectrale croisée par rapport au « pulse pair »

Considérons le traitement d'une série temporelle de M points de mesure avec M = 32, 64 ou 128.

Soit B le bruit dans la bande de base.

Le pulse pair permet de réduire le bruit en proportion de $\sqrt{M-1}$.

L'analyse spectrale croisée permet, dans le cas de l'utilisation d'une fenêtre de Hamming, de gagner le facteur $M$/2 sur le bruit (le facteur 2 prenant en compte le fait que la fenêtre de Hamming élargit le filtre de l'analyse de Fourrier par un facteur 2). Le tableau 1 compare, en fonction du nombre de points de l'analyse, la réduction de niveau de bruit obtenue par le pulse pair et par l'analyse spectrale croisée. On voit que par rapport au pulse pair, l'analyse spectrale croisée permet de gagner 4,5 à 7,5 dB en rapport signal/bruit.

[Tableau 1]

| Nombre de points | M | 32 | 64 | 128 |
|---|---|---|---|---|
| | linéaire | 0,18 | 0,13 | 0,09 |
| Pulse pair | dB | -7,53 | -9,03 | 10,54 |
| | linéaire | 0,06 | 0,03 | 0,02 |
| Analyse spectrale croisée | dB | -12,04 | -15,05 | 18,06 |
| | Gain/ Pulse P. | -4,52 | -6,02 | -7,53 |

**Revendications**

1. Procédé de détermination d'informations sur des paramètres physiques observables par un radar bipolaire à réception cohérente, apte à émettre des séries d'impulsions et recevoir et échantillonner un signal en retour, dans lequel au moins une unité de traitement met en œuvre les étapes suivantes d'estimation de paramètres polarimétriques

   • Détermination des séries temporelles du signal analytique pour ses deux voies d'émission H et V ;
   • Calcul, à partir de ces séries temporelles, des transformées de Fourier du signal analytique de ces deux voies H et V ;
   • Calcul, à partir de ces transformées de Fourier des spectres, de puissance de chaque voie HH, VV, et du spectre de puissance croisé HV ;
   • Identification dans le spectre de puissance croisée des raies qui contiennent du signal et de celles qui ne contiennent que du bruit ;
   • Suppression des spectres de puissances de chaque voie et du spectre de puissance croisée les raies aux fréquences identifiées comme ne contenant que du bruit dans le spectre de puissance croisée ;
   • Calcul des paramètres polarimétriques en fonction des spectres de puissances ainsi corrigés,
   et dans lequel une détermination d'informations sur des paramètres physiques observables est également mise en œuvre par traitement de ces paramètres polarimétriques.

2. Procédé selon la revendication 1, dans lequel on détermine les moments du spectre croisé et on traite les moments ainsi pour identifier des raies qui contiennent du signal.

3. Procédé selon la revendication 2, dans lequel les moments des voies HH et VV et ceux du spectre de puissance croisé HV sont calculés après suppression des raies ne contenant que du bruit et dans lequel les paramètres polarimétriques sont calculés en fonction des spectres de puissances ainsi corrigés.

4. Procédé selon l'une des revendications précédentes, dans lequel, pour une fréquence de répétition des impulsions du radar PRF, la détermination est mise en œuvre dans deux configurations :

   - la bande d'analyse de Fourier [-PRF/4, PRF/4] est centrée sur zéro
   - le spectre Doppler est représenté sur l'intervalle [0, PRF/2] et on sélectionne la configuration qui conduit à la variance la plus faible.

5. Procédé selon l'une des revendications précédentes, dans lequel les spectres de puissance sont traités pour distinguer l'écho « normal » de première trace à phase différentielle plus faible, et l'écho de seconde trace à phase différentielle nécessairement plus importante.

6. Produit programme d'ordinateur comprenant des instructions adaptées à la mise en œuvre des étapes du procédé selon l'une des revendications précédentes par au moins un calculateur.

[Fig. 1]

[Fig. 2]

[Fig. 3]

[Fig. 4]

Europäisches
Patentamt

European
Patent Office

Office européen
des brevets

# RAPPORT DE RECHERCHE EUROPEENNE

Numéro de la demande

**EP 22 20 4332**

## DOCUMENTS CONSIDERES COMME PERTINENTS

| Catégorie | Citation du document avec indication, en cas de besoin, des parties pertinentes | Revendication concernée | CLASSEMENT DE LA DEMANDE (IPC) |
|---|---|---|---|
| A | FR 2 774 174 A1 (CENTRE NAT RECH SCIENT [FR]) 30 juillet 1999 (1999-07-30)<br>* abrégé; figure 2 *<br>* page 1, ligne 1 - page 2, ligne 27 *<br>----- | 1-6 | INV.<br>G01S13/95<br>G01S7/02<br>G01S13/58 |
| A | US 6 448 923 B1 (ZRNIC DUSAN S [US] ET AL) 10 septembre 2002 (2002-09-10)<br>* abrégé; revendications 1,2; figure 1 *<br>* colonne 2, lignes 48-61 *<br>----- | 1-6 | |
| A | M.N. ANAGNOSTOU ET AL: "Correction for Rain Path Specific and Differential Attenuation of X-Band Dual-Polarization Observations",<br>IEEE TRANSACTIONS ON GEOSCIENCE AND REMOTE SENSING,<br>vol. 44, no. 9,<br>1 septembre 2006 (2006-09-01), pages 2470-2480, XP055226502,<br>USA<br>ISSN: 0196-2892, DOI: 10.1109/TGRS.2006.873204<br>* abrégé *<br>----- | 1-6 | |

|  |
|---|
| **DOMAINES TECHNIQUES RECHERCHES (IPC)** |
| G01S |

Le présent rapport a été établi pour toutes les revendications

| Lieu de la recherche | Date d'achèvement de la recherche | Examinateur |
|---|---|---|
| Munich | 10 mars 2023 | Mercier, Francois |

EPO FORM 1503 03.82 (P04C02)

EP 4 174 524 A1

## ANNEXE AU RAPPORT DE RECHERCHE EUROPEENNE
## RELATIF A LA DEMANDE DE BREVET EUROPEEN NO.

EP 22 20 4332

10-03-2023

| Document brevet cité au rapport de recherche | | Date de publication | Membre(s) de la famille de brevet(s) | | Date de publication |
|---|---|---|---|---|---|
| FR 2774174 | A1 | 30-07-1999 | AU | 748399 B2 | 06-06-2002 |
| | | | CA | 2318455 A1 | 29-07-1999 |
| | | | DE | 69934779 T2 | 11-10-2007 |
| | | | EP | 1049944 A1 | 08-11-2000 |
| | | | FR | 2774174 A1 | 30-07-1999 |
| | | | JP | 4183910 B2 | 19-11-2008 |
| | | | JP | 2002501205 A | 15-01-2002 |
| | | | US | 6473026 B1 | 29-10-2002 |
| | | | WO | 9938028 A1 | 29-07-1999 |
| US 6448923 | B1 | 10-09-2002 | AUCUN | | |